# EUROPEAN PATENT APPLICATION

(11) **EP 4 618 245 A1**
(43) Date of publication of application: **17.09.2025**
(21) Application number: 23901907.8
(22) Date of filing: 21.02.2023
(51) Int. Cl.: H01M 10/615, H01M 10/658, H01M 10/625

(54) **BATTERY AND ELECTRICAL DEVICE**

(30) Priority: 13.12.2022 CN 202223328119 U
(71) Applicant: Contemporary Amperex Technology (Hong Kong) Limited, Hong Kong (HK)
(72) Inventor: XU, Liangfan, Ningde, Fujian 352100 (CN); LI, Xing, Ningde, Fujian 352100 (CN); NIU, Shaojun, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/077466
(87) International publication number: WO 2024/124689

(57) **Abstract**

The present application provides a battery and an electrical device. The battery includes: a plurality of thermal management components disposed at intervals along a first direction; at least one battery cell group, each battery cell group being disposed between two adjacent thermal management components; where each battery cell group includes a plurality of battery cells arranged along a second direction perpendicular to the first direction, and a first heat exchange cavity configured to accommodate the heat exchange medium is disposed inside each of the thermal management components so that temperatures of the battery cells are adjusted by using the thermal management component; and a bottom plate disposed on a side of the plurality of thermal management components along a third direction and connected with at least one thermal management component, where the first direction, the second direction, and the third direction are perpendicular to each other. According to the technical solution of the present application, a plurality of battery cells of each battery cell group are sandwiched between two adjacent thermal management components, and share the two thermal management components, thereby improving the volumetric energy density of the battery while saving the overall production cost of the battery.

## Description

### CROSS-REFERENCE TO RELATED APPLICATIONS

The present application claims priority to Chinese Patent Application No. 202223328119.0 entitled "BATTERY AND ELECTRICAL DEVICE" filed on December 13, 2022, which is incorporated herein by reference in its entirety.

### TECHNICAL FIELD

The present application relates to the technical field of batteries, and in particular, to a battery and an electrical device.

### BACKGROUND

Energy saving and emission reduction are the key to the sustainable development of the automotive industry, and electric vehicles have become an important part of the sustainable development of the automotive industry by virtue of their advantages of energy saving and environmental protection. For electric vehicle, battery technology is a crucial factor driving the development thereof.

How to improve the energy density of a battery is an urgent technical problem to be solved in the battery technology.

### SUMMARY

Embodiments of the present application provide a battery and an electrical device, which can effectively improve energy density of the battery.

According to a first aspect, the present application provides a battery. The battery includes: a plurality of thermal management components disposed at intervals along a first direction; at least one battery cell group, each battery cell group being disposed between two adjacent thermal management components; where each battery cell group includes a plurality of battery cells arranged along a second direction perpendicular to the first direction, and a first heat exchange cavity configured to accommodate a heat exchange medium is disposed inside each of the thermal management components so that temperatures of the battery cells are adjusted by using the thermal management component.

According to the technical solution of the present application, the plurality of battery cells of the battery cell group are sandwiched between two adjacent thermal management components, and the two adjacent thermal management components can achieve a limiting and supporting effect on the battery cells of the battery cell group, reduce the possibility of deformation of the battery cells caused by mutual extrusion of a plurality of battery cell groups, and achieve an anti-expansion effect on the battery cells, thereby improving the structural stability of the entire battery. At the same time, by sandwiching the plurality of battery cells between two same thermal management components, heat exchange area of each battery cell is more evenly distributed, and the uniformity of temperature control is monitored while the heat exchange area is increased, so that the performance stability of the battery is further improved. Moreover, compared with the structure in which each battery cell is sandwiched between two adjacent thermal management components that are separately disposed, a plurality of battery cells of the battery cell group share two thermal management components, which can simplify the structure and production and installation process of the thermal management components of the entire battery, reduce the number of thermal management components of the entire battery, and thereby reduce the design of additional structures (e.g., liquid inlet and outlet pipes and installation and fixation structures of thermal management components) of thermal management components. In this way, not only the overall production cost of the battery is saved, but also the space occupation rate of the additional structures of the thermal management components in the battery is reduced, which is conducive to improving the volumetric energy density of the battery.

According to some embodiments of the present application, the battery cell includes a first surface and a second surface disposed opposite to each other along the first direction, where the first surface and/or the second surface are/is a surface with a largest area among all external surfaces of the battery cell.

In the above technical solution, the surface of the battery cell with the largest area faces towards the thermal management component, which can further increase the heat exchange area between the battery cell and the thermal management component, thereby improving the temperature regulation effect of the thermal management component on the battery cell.

According to some embodiments of the present application, the battery cell includes the first surface and the second surface disposed opposite to each other along the first direction, where the first surface is opposite to one of two adjacent thermal management components, and the second surface is opposite to the other of the two adjacent thermal management components; and the first surface and/or the second surface are/is in contact with the thermal management component.

In the above technical solution, at least one surface of the battery cell facing towards the thermal management component is in direct contact with the thermal management component, which can effectively improve the temperature transfer and exchange efficiency between the thermal management component and the battery cell, and effectively reduce the loss of heat or cooling capacity from the thermal management component, thereby further improving the temperature regulation effect of the thermal management component on the battery cell.

According to some embodiments of the present application, the thermal management component is of a plate-like structure, and a thickness direction of the thermal management component is parallel to the first direction.

In the above technical solution, the thermal management component is of a plate-like structure, and a larger surface of the thermal management component faces towards the battery cell, which can effectively increase an effective action area of the thermal management component and further improve the temperature regulation effect of the thermal management component on the battery cell.

According to some embodiments of the present application, the battery further includes: a plurality of partition pieces disposed between two adjacent battery cells of each battery cell group.

In the above technical solution, a partition piece is disposed between two adjacent battery cells of each battery cell group, and can achieve a certain insulating effect or even limiting effect on the two adjacent battery cells, thereby improving the service performance of the battery.

According to some embodiments of the present application, the partition piece is connected with two adjacent thermal management components.

In the above technical solution, the partition piece is connected with two adjacent thermal management components to achieve a certain supporting effect on the two adjacent thermal management components, thereby improving the structural stability of the thermal management components; at the same time, the partition piece is connected with the thermal management components so that the structural and positional stability of the partition piece itself can be improved, which is conducive to giving full play to the limiting effect of the partition piece on battery cells, and is conducive to further improving the anti-expansion effect on the battery.

According to some embodiments of the present application, the thermal management components and the partition pieces are integrally formed.

In the above technical solution, the thermal management components and the partition piece are integrally formed, which can further improve the structural strength of the thermal management components and the partition piece, and is conducive to simplifying the assembly process of the battery.

According to some embodiments of the present application, a second heat exchange cavity configured to accommodate the heat exchange medium is disposed in the partition piece.

In the above technical solution, the heat exchange medium can be accommodated inside the partition piece, that is, the partition piece itself is formed into a thermal management component, which can stably limit battery cells while exchanging heat with the battery cells, thereby further improving the temperature regulation effect on the battery cells.

According to some embodiments of the present application, the second heat exchange cavity is connected with the first heat exchange cavity of at least one thermal management component.

In the above technical solution, the second heat exchange cavity of the partition piece is communicated with the first heat exchange cavity of at least one thermal management component connected with the partition piece, which can effectively improve the fluidity of the heat exchange medium in the thermal management component and the partition piece, thereby further improving the heat exchange efficiency of the thermal management component and the partition piece. At the same time, unlike a structure in which the first heat exchange cavity and the second heat exchange cavity are isolated from each other, the first heat exchange cavity and the second heat exchange cavity are communicated with each other, so there is no need to dispose a separate liquid inlet and outlet structure on each of the thermal management components and partition pieces. In this way, the number of liquid inlet and outlet structures of partition pieces or thermal management components can be reduced, thereby reducing the space occupation rate of such components inside the battery, which is conducive to further improving the energy density of the battery.

According to some embodiments of the present application, the partition piece is provided with a third surface facing towards the battery cells, and the third surface is provided with a heat insulation layer.

In the above technical solution, the surface of the partition piece facing towards the battery cells is provided with the heat insulation layer, which can effectively improve the heat insulation effect of the partition piece. When thermal runaway occurs to an individual battery cell, the partition piece can effectively reduce the risk that heat of the battery cell under thermal runaway is transferred to adjacent battery cells, thereby effectively reducing the risk of thermal diffusion of the battery and improving the reliability of the battery.

According to some embodiments of the present application, the partition piece is a heat insulation pad.

In the above technical solution, the heat insulation pad is directly adopted as the partition piece, which is mature in structure, low in cost, and can effectively improve the heat insulation effect of the partition piece on adjacent battery cells.

According to some embodiments of the present application, the partition piece is in contact with the battery cell.

In the above technical solution, the partition piece is in contact with the battery cell, which is conducive to giving full play to the limiting effect of the partition piece on the battery cell and improving the relative positional stability of the battery cell; at the same time, waste of the space between the partition piece and the battery cell can be reduced, which is conducive to further improving the internal space utilization of the battery, thereby improving the volumetric energy density of the battery.

According to some embodiments of the present application, the battery further includes: two side plates disposed at intervals along the second direction, where the thermal management component is connected with the two side plates.

In the above technical solution, the two side plates are disposed on two opposite sides of the thermal management component along the second direction, and the side plates can further improve the structural integration of the battery, and achieve a fixing and limiting effect on a plurality of thermal management components, which is conducive to improving the relative positional stability of the plurality of thermal management components; at the same time, the side plates achieve a protecting and limiting effect on the battery cell of the battery cell group located on the outermost side in the second direction.

According to some embodiments of the present application, a third heat exchange cavity configured to accommodate the heat exchange medium is disposed in the side plate.

In the above technical solution, the heat exchange medium can be accommodated inside the side plate, that is, the side plate itself is also formed into a thermal management component, which can stably limit and protect battery cells while exchanging heat with the battery cells, thereby further improving the temperature regulation effect on the battery cells.

According to some embodiments of the present application, the third heat exchange cavity is communicated with the first heat exchange cavity of at least one thermal management component.

In the above technical solution, the third heat exchange cavity of the side plate is communicated with the first heat exchange cavity of at least one thermal management component, which can effectively improve the fluidity of the heat exchange medium in the thermal management component and the side plate, thereby further improving the heat exchange efficiency of the thermal management component and the side plate. At the same time, unlike a structure in which the first heat exchange cavity and the third heat exchange cavity are isolated from each other, the first heat exchange cavity and the third heat exchange cavity are communicated with each other, so there is no need to dispose a separate liquid inlet and outlet structure on each of the thermal management components and side plates. In this way, the number of liquid inlet and outlet structures of side plates or thermal management components can be reduced, thereby reducing the space occupation rate of such components inside the battery, which is conducive to further improving the energy density of the battery.

According to some embodiments of the present application, the thermal management components and the side plate are integrally formed.

In the above technical solution, the thermal management component and the side plate are integrally formed, which can further improve the integration of the thermal management component and the side plate, and improve the structural strength of the thermal management component and the side plate, thereby giving full play to the anti-expansion effect of the thermal management component and the side plate, and simplifying the assembly process of the entire battery.

According to some embodiments of the present application, the battery further includes a bottom plate disposed on a side of the plurality of thermal management components along a third direction and connected with at least one thermal management component, where the first direction, the second direction, and the third direction are perpendicular to each other.

In the above technical solution, the bottom plate can be configured to support the battery cell group, and plays a limiting effect on the battery cells in the third direction, which is conducive to further improving the positional stability of each battery cell; and the bottom plate can achieve an isolating and protecting effect on the battery cells, which is conducive to improving the performance stability and use safety and reliability of the battery.

According to some embodiments of the present application, the bottom plate is in contact with the battery cell.

In the above technical solution, the bottom plate is in contact with the battery cell, which is conducive to giving full play to the limiting effect of the bottom plate on the battery cell and improving the relative positional stability of the battery cell; at the same time, waste of the space between the bottom plate and the battery cell can be reduced, which is conducive to further improving the internal space utilization of the battery, thereby improving the volumetric energy density of the battery.

According to some embodiments of the present application, the bottom plate and the thermal management components are integrally formed.

In the above technical solution, the thermal management component and the bottom plate are integrally formed, which can further improve the integration of the thermal management component and the bottom plate, and improve the structural strength of the thermal management component and the bottom plate, thereby giving full play to the anti-expansion effect of the thermal management component and the bottom plate, and simplifying the assembly process of the entire battery.

According to some embodiments of the present application, a fourth heat exchange cavity configured to accommodate the heat exchange medium is disposed in the bottom plate.

In the above technical solution, the heat exchange medium can be accommodated inside the bottom plate, that is, the bottom plate itself is also formed into a thermal management component, which can stably limit and protect battery cells while exchanging heat with the battery cells, thereby further improving the temperature regulation effect on the battery cells.

According to some embodiments of the present application, the fourth heat exchange cavity is communicated with the first heat exchange cavity of at least one thermal management component.

In the above technical solution, the fourth heat exchange cavity of the bottom plate is communicated with the first heat exchange cavity of at least one thermal management component, which can effectively improve the fluidity of a heat exchange medium in the thermal management component and the bottom plate, thereby further improving the heat exchange efficiency of the thermal management component and the side plate. At the same time, the number of liquid inlet and outlet structures of bottom plates or thermal management components can be reduced, thereby reducing the space occupation rate of such components inside the battery, which is conducive to further improving the energy density of the battery.

According to some embodiments of the present application, a side that is of the battery cell and that is facing away from the bottom plate is provided with an electrode terminal.

In the above technical solution, the electrode terminal of each battery cell is located on the side that is of the battery cell and that is facing away from the bottom plate so as to facilitate the interconnection of the electrode terminals of the plurality of battery cells, which is conducive to simplifying the assembly process of the battery and reducing the difficulty of assembling the battery. In addition, the disposal of the electrode terminal on the side that is of the battery cell and that is facing away from the bottom plate can effectively reduce the occupation rate of the electrode terminals in an accommodation space enclosed by the thermal management component and the bottom plate, so that the accommodation space can accommodate as many main body structures of the battery cells as possible, which is also conducive to improving the energy density of the battery.

According to some embodiments of the present application, the battery cell is a pouch-type battery cell.

In the above technical solution, the battery cell is a pouch-type battery cell which is prone to deformation. By sandwiching the pouch-type battery cell between two adjacent thermal management components, the structural strength of the pouch-type battery cell can be effectively improved. In the meanwhile, the thermal management components can achieve a supporting effect on the battery cell groups, and isolate the two adjacent battery cell groups, so as to reduce the possibility that a large number of pouch-type battery cells are deformed after being stacked together and squeezed with each other, and reduce the risk of large-scale thermal diffusion when thermal runaway occurs to a battery cell, thereby improving the structural stability and performance reliability of the pouch-type battery.

According to a second aspect, the present application provides an electrical device. The electrical device includes the battery according to any one of the above solutions. The battery is configured to provide electrical energy.

### BRIEF DESCRIPTION OF DRAWINGS

To describe technical solutions in embodiments of the present application more clearly, the following outlines the drawings to be used in the embodiments. Understandably, the following drawings show merely some embodiments of the present application, and therefore, are not intended to limit the scope. A person of ordinary skill in the art may derive other related drawings from the drawings without making any creative efforts.
FIG. 1 is a schematic structural diagram of a vehicle according to some embodiments of the present application;
FIG. 2 is a front view of a battery according to some embodiments of the present application.
FIG. 3 is a front view of a battery according to still other embodiments of the present application.
FIG. 4 is a front view of the battery according to still other embodiments of the present application, where a partition piece of the battery is a heat insulation pad.
FIG. 5 is a front view of a battery according to yet some other embodiments of the present application.
FIG. 6 is an exploded view of a battery according to some other embodiments of the present application.
FIG. 7 is a schematic diagram of an overall structure of the battery according to some other embodiments of the present application.

The drawings are not drawn to actual scale.

Reference Numerals: 1000. Vehicle; 100. Battery; 10. Battery cell group; 20. Battery cell; 21. Electrode terminal; 211. Positive terminal; 212. Negative terminal; 22. First surface; 23. Second surface; 30. Thermal management component; 40. Partition piece; 41. Third surface; 42. Heat insulation pad; 50. Side plate; 60. Bottom plate; 70. Accommodation space; 200. Controller; 300. Motor; X. First direction; Y. Second direction; and Z. Third direction.

### DETAILED DESCRIPTION OF EMBODIMENTS

In order to make objectives, technical solutions and advantages of embodiments of the present application clearer, the technical solutions in embodiments of the present application will be clearly and completely described below in conjunction with accompanying drawings in the embodiments of the present application. Apparently, the described embodiments are merely some rather than all of the embodiments of the present application. Based on the embodiments in the present application, all other embodiments obtained by a person of ordinary skill in the art without creative labor shall fall within the scope of protection of the present application.

Unless otherwise defined, all technical and scientific terms used in the present application have the same meanings as what is normally understood by a person skilled in the technical field of the present application. The terms used in the specification of the present application are merely intended to describe specific embodiments but not intended to limit the present application. The terms "include" and "contain" and any variations thereof used in the specification, claims, and brief description of accompanying drawings of the present application are intended as non-exclusive inclusion. The terms "first", "second", etc. in the specification and claims of the present application or in the accompanying drawings described above are used to distinguish between different objects, and are not used to describe a particular order or relationship of priority.

Reference to "embodiment" herein implies that particular features, structures, or characteristics described in conjunction with an embodiment may be included in at least one embodiment of the present application. Reference to this term in different places in the specification does not necessarily represent the same embodiment, nor does it represent an independent or alternative embodiment in a mutually exclusive relationship with other embodiments.

In the description of the present application, it is hereby noted that unless otherwise expressly specified and defined, the terms "mount", "connected", "connection", and "attach" are understood in a broad sense. For example, it may be a fixed connection, a detachable connection, or an integrated connection; or may be a direct connection or an indirect connection implemented through an intermediary; or may be internal communication between two components. To a person of ordinary skill in the art, the specific meaning of the above terms in the present application may be understood according to specific situations.

The term "and/or" in the present application indicates merely a relation for describing the related items, and represents three possible relationships. For example, A and/or B may represent the following three circumstances: A alone, both A and B, and B alone. In addition, the character "/" in the present application generally indicates an "or" relationship of the successively related items.

In the embodiments of the present application, the same reference numerals indicate the same components, and detailed descriptions of the same components are omitted in different embodiments for the sake of brevity. Understandably, dimensions, such as thickness, length, and width of various components in the embodiments of the present application shown in the accompanying drawings, and dimensions, such as overall thickness, length, and width of an integrated apparatus are merely illustrative descriptions, but do not constitute any limitation on the present application.

"A plurality of" referred to in the present application means two or more (including two).

In the present application, a battery cell may include a lithium-ion secondary battery, a lithium-ion primary battery, a lithium-sulfur battery, a sodium-ion battery, a magnesium-ion battery, or the like, without being limited in embodiments of the present application. The battery cell may be in various shapes such as flat, cuboidal or other shapes, or may be a pouch-type battery cell, further without being limited in embodiments of the present application.

A battery mentioned in the embodiments of the present application refers to a single physical module including one or more battery cells to provide a higher voltage and larger capacity. For example, the battery mentioned in the present application may include a battery module, a battery pack, or the like. The battery may further generally include a box body for packaging one or more battery cells or a plurality of battery modules. The box body can prevent liquid or other foreign objects from affecting charging or discharging of the battery cell.

The battery cell includes an electrode assembly and an electrolyte solution, and the electrode assembly is composed of a positive electrode plate, a negative electrode plate and a separator. The battery cell works primarily by relying on shuttling lithium ions between a positive electrode plate and a negative electrode plate. the electrode assembly may be of a wound structure and may also be of a laminated structure, without being limited in embodiments of the present application.

Batteries exhibit outstanding advantages such as a high energy density, low environmental pollution, a high power density, a long service life, a wide range of adaptability, and a small self-discharge coefficient, and are an important part of new energy development nowadays. With the development of the new energy industry, batteries are gradually developing towards large capacity and high integration.

However, when a large quantity of battery cells are stacked together, it will be of vital importance to achieve temperature control over the inside of batteries, since uneven temperature distribution may cause continuous difference magnification between battery cells and accelerate battery failure, which directly affects the service life and reliability of batteries. Taking pouch-type batteries as an example, when a large quantity of pouch-type batteries need to be stacked together, the support performance and protection performance of the same will become weak. When thermal runaway occurs to an individual battery cell, it may easily cause large-scale thermal diffusion, thereby affecting the service life and reliability of the batteries.

In some technologies, in order to improve the control effect on the temperature distribution uniformity of the battery, a separate thermal management component is disposed on the surface of each battery cell. Specifically, each battery module includes a plurality of battery cells and a plurality of thermal management components disposed at intervals along a stacking direction of the plurality of battery cells, where each battery cell is sandwiched between two adjacent thermal management components, and the thermal management components limit the battery cell while exchanging heat with the battery cell. In this way, the heat exchange area of each battery cell is effectively increased, and the heat exchange areas of a plurality of battery cells are more uniformly distributed, thereby solving the problems of excessively high temperature, excessively low temperature, and uneven temperature distribution among battery cells.

However, the inventor has found that such structure of the battery leads to a high space occupation rate in the battery, which seriously limits the improvement of energy density of the battery. Therefore, such battery cannot meet the market requirements for high energy density of the battery.

In view of the foregoing factors, in order to improve the energy density of a battery while effectively improving the temperature control uniformity of the battery, the inventor has designed a battery. The battery includes thermal management components and battery cells, where a plurality of battery cells are arranged in a parallel manner between two adjacent thermal management components, and a first heat exchange cavity configured to accommodate a heat exchange medium is disposed inside each of the thermal management components so that temperatures of the battery cells are adjusted by using the thermal management component.

According to the technical solution of the present application, a plurality of battery cells of a battery cell group are sandwiched between two adjacent thermal management components, and the two adjacent thermal management components can achieve a limiting and supporting effect on the battery cells of the battery cell group, reduce the possibility of deformation of the battery cells caused by mutual extrusion of a plurality of battery cell groups, and achieve an anti-expansion effect on the battery cells, thereby improving the structural stability of the entire battery. At the same time, by sandwiching the plurality of battery cells between two same thermal management components, heat exchange areas of each battery cell are more evenly distributed, and the uniformity of temperature control is monitored while the heat exchange area is increased, so that the performance stability of the battery is further improved.

Moreover, compared with the structure in which each battery cell is sandwiched between two adjacent thermal management components that are separately disposed, a plurality of battery cells of the battery cell group share two thermal management components, which can simplify the structure and production and installation process of the thermal management components of the entire battery, reduce the number of thermal management components of the entire battery, and thereby reduce the design of additional structures (e.g., liquid inlet and outlet pipes and installation and fixation structures of thermal management components) of thermal management components. In this way, not only the overall production cost of the battery is saved, but also the space occupation rate of the additional structures of the thermal management components in the battery is reduced, which is conducive to improving the volumetric energy density of the battery.

The battery disclosed in the embodiments of the present application is applicable to, but not limited to use in, electrical devices such as vehicles, ships or aircraft. A power supply system of the electrical device may be composed of the battery disclosed in the present application.

Embodiments of the present application further provide an electrical device using a battery as a power supply. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, or the like. The spacecraft may include an airplane, a rocket, a space shuttle, a spaceship, or the like.

The battery described in the embodiments of the present application is not only applicable to the electrical device mentioned above, but also applicable to all battery-powered electrical devices. However, for brevity, the following embodiments are described by taking an example of an electrical device as a vehicle.

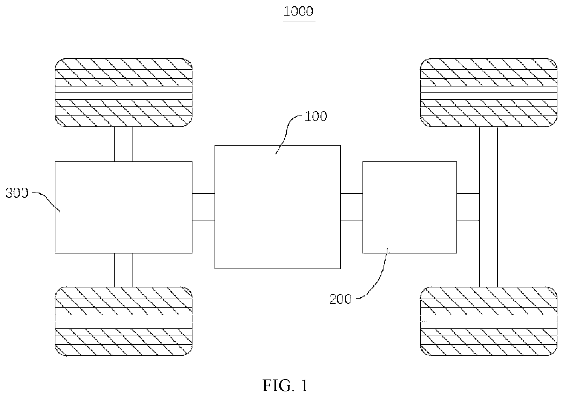

Referring to FIG. 1, FIG. 1 is a schematic structural diagram of a vehicle 1000 according to some embodiments of the present application. The vehicle 1000 may be an oilfueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet the working power requirements of the vehicle 1000 in start, navigation and running.

In some embodiments of the present application, the battery 100 may serve not only as the operation power supply of the vehicle 1000, but also as a driving power supply of the vehicle 1000, replacing or partially replacing fuel or natural gas to provide driving power for the vehicle 1000.

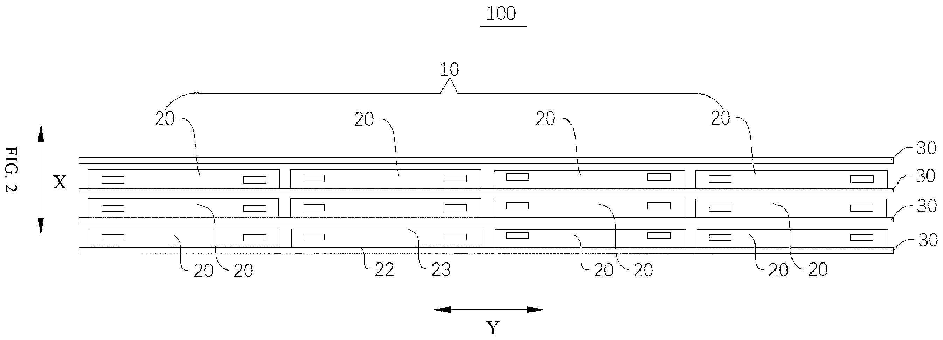

Referring to FIG. 2, FIG. 2 is a front view of a battery according to some embodiments of the present application. Some embodiments of the present application provide a battery 100. The battery 100 includes: a plurality of thermal management components 30, the plurality of thermal management components 30 being disposed at intervals along a first direction X; and at least one battery cell group 10, each battery cell group 10 being disposed between two adjacent thermal management components 30; where each battery cell group 10 includes a plurality of battery cells 20 arranged along a second direction Y perpendicular to the first direction X, and a first heat exchange cavity configured to accommodate a heat exchange medium is disposed inside each of the thermal management components 30 so that temperatures of the battery cells 20 are adjusted by using the thermal management component 30.

The thermal management component 30 is configured to accommodate the heat exchange medium to regulate temperatures of a plurality of battery cells 20, where the heat exchange medium is accommodated in the first heat exchange cavity. The heat exchange medium described herein may be a liquid or a gas, and regulating the temperature means heating or cooling a plurality of battery cells 20. In a case where the battery cells 20 are cooled or the temperatures of the battery cells are reduced, the thermal management component 30 is configured to accommodate a cooling medium to reduce the temperatures of the plurality of battery cells 20. In this case, the thermal management component 30 may also be referred to as a cooling component, a cooling system, a cooling plate, or the like, and the heat exchange medium accommodated in the thermal management component may also be referred to as a cooling medium, and more specifically, may be referred to as a cooling liquid or a cooling gas. In addition, the thermal management component 30 may also be configured to heat to increase the temperatures of the plurality of battery cells 20, and this is not limited in embodiments of the present application. As an example, the thermal management component 30 accommodates a cooling liquid to reduce the temperatures of a plurality of battery cells 20.

It can be understood that the thermal management component 30 may be a structure in any shape such as a plate shape, a tube shape, etc., with a cavity that can accommodate the heat exchange medium. The shape of the thermal management component 30 may be adaptively adjusted according to requirements for the external structure of the battery 100, the shape of the battery cells 20, etc. The thermal management component 30 can be made of a material with a good thermal conductivity, such as aluminum and copper or other metal materials.

The battery cell 20 may be a hard-shell battery cell, which is in the shape such as a flat body, a cuboid, or another shape. The battery cell 20 may also be a pouch-type battery cell.

Two, three or even more thermal management components 30 may be disposed at intervals along the first direction X. When two thermal management components 30 are disposed, one battery cell group 10 is disposed, the battery cell group 10 is disposed between two thermal management components 30. When three thermal management components 30 are disposed, two battery cell groups 10 are disposed, the battery cell group 10 is disposed between every two adjacent thermal management components 30, and so on.

Each battery cell group 10 may include two, three or even a plurality of battery cells 20, and the plurality of battery cells 20 of each battery cell group 10 are arranged in a parallel manner between two adjacent thermal management components 30 along the second direction Y that is perpendicular to the first direction X, where the two adjacent battery cells 20 may be in contact with each other or may be spaced apart from each other.

In the battery 100, the plurality of battery cells 20 may be connected in series or in parallel or in parallel and series, and "connected in parallel and series" means that there are both series and parallel connections in the plurality of battery cells 20. The plurality of battery cells 20 can be directly connected in series, in parallel, or in parallel and series. Certainly, in the battery 100, the plurality of battery cells 20 may first be connected in series or in parallel or in parallel and series to form modules of the battery 100, and then a plurality of modules of the battery 100 are connected in series or in parallel or in parallel and series to form a whole. The battery 100 may also include a busbar component for realizing an electrical connection between the plurality of battery cells 20.

It can be understood that the battery cell group 10 refers to a plurality of battery cells 20 disposed between two adjacent thermal management components 30, and there is no limitation that the battery cells 20 of the same battery cell group 10 are directly connected with each other. That is, the battery cell group 10 is not equivalent to the modules of the battery 100 described above. The modules of the battery 100 may be formed by interconnection of a plurality of battery cells 20 from different battery cell groups 10.

A plurality of battery cells 20 of the battery cell group 10 are sandwiched between two adjacent thermal management components 30, and the two adjacent thermal management components 30 can achieve a limiting and supporting effect on the battery cells 20 of the battery cell group 10, and achieve an anti-expansion effect on the battery cells 20, thereby improving the structural stability of the entire battery 100. At the same time, by sandwiching the plurality of battery cells 20 between two same thermal management components 30, the heat exchange area of each battery cell 20 is more evenly distributed, and the uniformity of temperature control is monitored while the heat exchange area is increased, so that the performance stability of the battery 100 is further improved. Moreover, a plurality of battery cells 20 of the battery cell group 10 share two thermal management components 30, which can simplify the structure and production and installation process of the thermal management components 30 of the entire battery 100, reduce the number of thermal management components 30 of the entire battery 100, and thereby reduce the design of additional structures (e.g., liquid inlet and outlet pipes and installation and fixation structures of thermal management components 30) of thermal management components 30. In this way, not only the overall production cost of the battery 100 is saved, but also the space occupation rate of the additional structures of the thermal management components 30 in the battery 100 is reduced, which is conducive to improving the volumetric energy density of the battery 100.

In some embodiments, still referring to FIG. 2, the battery cell 20 includes a first surface 22 and a second surface 23 disposed opposite to each other along the first direction X.

Specifically, the thermal management components 30 are disposed at intervals along the first direction X, each battery cell 20 is disposed between two adjacent thermal management components 30, and the first surface 22 and the second surface 23 of the battery cell 20 are also disposed opposite to each other along the first direction X, where the first surface 22 is opposite to one of two adjacent thermal management components 30 located on two opposite sides of the battery cell 20, and the second surface 23 is opposite to the other of the two adjacent thermal management components 30.

The first surface 22 and/or the second surface 23 may or may not be an external surface with a largest area of the battery cell 20. The first surface 22 may be in contact with the thermal management component 30 opposite to the same, or there may be a gap between the first surface and the thermal management component 30 opposite to the same. Similarly, the second surface 23 may be in contact with the thermal management component 30 opposite to the same, or there may be a gap between the second surface and the thermal management component 30 opposite to the same.

In some embodiments, as shown in FIG. 2, the first surface 22 and/or the second surface 23 are/is a surface with a largest area among all external surfaces of the battery cell 20.

Specifically, the first surface 22 and the second surface 23 of the battery cell 20 may both be surfaces with the largest area of the battery cell 20 (the area of the first surface 22 is equal to that of the second surface 23), or the first surface 22 may be the surface with the largest area of the battery cell 20, and the area of the second surface 23 is smaller than that of the first surface 22, and vice versa. For example, the battery cell 20 is of a flat structure, and the thickness direction of the battery cell 20 is parallel to the first direction X, that is, the first surface 22 and the second surface 23 are disposed opposite to each other along the thickness direction of the battery cell 20, and the area of the first surface 22 is approximately the same as that of the second surface 23 and larger than the area of any other surfaces of the battery cell 20.

The surface of the battery cell with the largest area faces towards the thermal management component 30, which can further increase the heat exchange area between the battery cell 20 and the thermal management component 30, thereby improving the temperature regulation effect of the thermal management component 30 on the battery cell 20.

In some embodiments, as shown in FIG. 2, the first surface 22 and/or the second surface 23 are/is in contact with the thermal management component 30.

Specifically, it's possible that only the first surface 22 of the battery cell 20 is in contact with the thermal management component 30, or only the second surface 23 of the battery cell 20 is in contact with the thermal management component 30, or both the first surface 22 and the second surface 23 of the battery cell 20 are in contact with the thermal management component 30 opposite to the same.

The first surface 22 and the thermal management component 30 can be in line contact or surface contact with each other, and correspondingly, the second surface 23 and the thermal management component 30 can be in line contact or surface contact with each other.

As an example, the first surface 22 and the second surface 23 of the battery cell 20 may both be surfaces with the largest area of the battery cell 20, and both the first surface 22 and the second surface 23 are in surface contact with the thermal management component 30.

At least one surface of the cell of the battery 100 facing towards the thermal management component 30 is in direct contact with the thermal management component 30, which can effectively improve the temperature transfer and exchange efficiency between the thermal management component 30 and the battery cell 20, and effectively reduce the loss of heat or cooling capacity from the thermal management component 30, thereby further improving the temperature regulation effect of the thermal management component 30 on the battery cell 20.

In some embodiments, still referring to FIG. 2, the thermal management component 30 is of a plate-like structure, and a thickness direction of the thermal management component 30 is parallel to the first direction X.

Specifically, the thermal management component 30 is of a plate-like structure, and one side surface of the thermal management component 30 with a larger area along the thickness direction faces towards the battery cell 20.

As mentioned above, a first heat exchange cavity configured to accommodate the heat exchange medium is disposed inside the thermal management component 30. Based on the embodiment in which the thermal management component 30 is of a plate-like structure, there can be various embodiments for the first heat exchange cavity. For example, a cavity may be disposed inside the thermal management component 30, and the cavity is formed into the first heat exchange cavity. A plurality of parallel or S-shaped circuitous channels may also be disposed inside the thermal management component 30, and the channels disposed inside the thermal management component 30 are formed into the first heat exchange cavity.

As an example, a harmonica-shaped tube in the shape of a flat tube may be adopted as the thermal management component 30.

It can be understood that the thermal management component 30 may extend to both ends of the battery cell 20 along a third direction Z, or may extend to only one end of the battery cell 20, or both ends of the battery cell 20 along the third direction Z are exposed outside the thermal management component 30. The third direction Z, the first direction X and the second direction Y are perpendicular to each other. As an example, the thermal management component 30 extends to both ends of the battery cell 20 along the third direction Z.

In addition, in some other embodiments, the thermal management component 30 may also be provided with a liquid inlet and a liquid outlet communicated with the first heat exchange cavity. The heat exchange medium may enter the thermal management component 30 through the liquid inlet and be discharged from the thermal management component 30 through the liquid outlet, so as to enhance the circulation of the heat exchange medium in the thermal management component 30 and replacement of the same, and improve the heat exchange effect of the thermal management component 30.

The thermal management component 30 is of a plate-like structure, and the larger surface of the thermal management component 30 faces towards the battery cell 20, which can effectively increase an effective action area of the thermal management component 30 and further improve the temperature regulation effect of the thermal management component 30 on the battery cell 20.

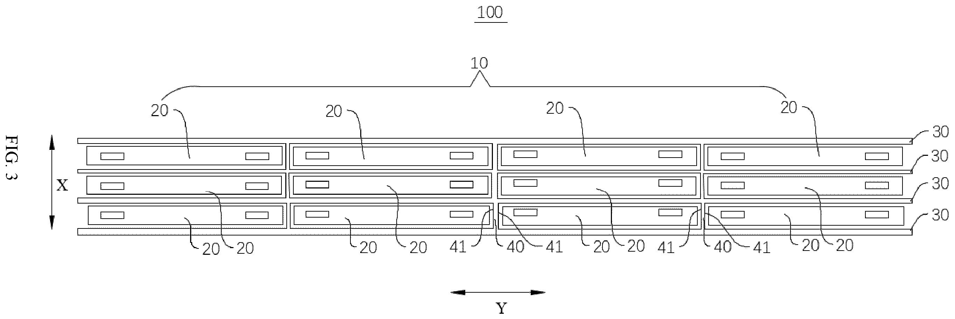

In yet other embodiments, referring to FIG. 3, FIG. 3 is a front view of a battery according to still other embodiments of the present application. The battery 100 further includes a plurality of partition pieces 40, and the plurality of partition pieces 40 are disposed between two adjacent battery cells 20 of each battery cell group 10. The partition pieces 40 can achieve a certain insulating effect or even limiting effect on the two adjacent battery cells 20, thereby improving the service performance of the battery 100.

Specifically, there can be various embodiments for the partition piece 40. The partition piece 40 may be of an elastic structure or a rigid structure, and the partition piece 40 may be connected with the thermal management component 30, or may be disposed separately and not connected with the thermal management component 30.

In some embodiments, as shown in FIG. 3, the partition piece 40 is connected with two adjacent thermal management components 30.

Specifically, the partition piece 40 may be bonded to the thermal management component 30 by using glue, welded to the thermal management component 30, or connected to the thermal management component 30 by using fasteners such as bolts. Still alternatively, the partition piece 40 and the thermal management component 30 may be integrally formed.

The partition piece 40 is connected with two adjacent thermal management components 30 to achieve a certain supporting effect on the two adjacent thermal management components 30, thereby improving the structural stability of the thermal management components 30; at the same time, the partition piece 40 is connected with the thermal management components 30 so that the structural and positional stability of the partition piece 40 itself can be improved, which is conducive to giving full play to the limiting effect of the partition piece 40 on battery cells 20, and is conducive to further improving the anti-expansion effect on the battery 100.

In some embodiments, the thermal management components 30 and the partition pieces 40 are integrally formed.

The thermal management component 30 and the partition piece 40 are integrally formed, which can further improve the structural strength of the thermal management component 30 and the partition piece 40, and is conducive to simplifying the assembly process of the battery 100.

In some embodiments, a second heat exchange cavity configured to accommodate the heat exchange medium is disposed in the partition piece 40.

In other words, the partition piece 40 can be made of a material with a good thermal conductivity to accommodate the heat exchange medium to regulate the temperature of the battery cell 20.

Similar to the structures of the thermal management component 30, there can be various embodiments for the second heat exchange cavity. For example, a cavity may be disposed inside the partition piece 40, and the cavity is formed into the second heat exchange cavity. A plurality of parallel or S-shaped circuitous channels may also be disposed inside the partition piece 40, and the channels disposed inside the partition piece 40 are formed into the second heat exchange cavity.

The heat exchange medium can be accommodated inside the partition piece 40, that is, the partition piece 40 itself is formed into a thermal management component 30, which can stably limit battery cells 20 while exchanging heat with the battery cells 20, thereby further improving the temperature regulation effect on the battery cells 20.

In some embodiments, the second heat exchange cavity is connected with the first heat exchange cavity of at least one thermal management component 30.

Specifically, the second heat exchange cavity of the partition piece 40 may be communicated with the first heat exchange cavity of one thermal management component 30 connected with the partition piece 40, but not communicated with the first heat exchange cavity of the other thermal management component 30. The second heat exchange cavity may also be communicated with the first heat exchange cavities of the two thermal management components 30 connected with the partition piece 40. As an example, the second heat exchange cavity of the partition piece 40 is communicated with both the first heat exchange cavities of the two thermal management components 30 connected with the partition piece 40.

The second heat exchange cavity of the partition piece 40 is communicated with the first heat exchange cavity of at least one thermal management component 30 connected with the partition piece 40, which can effectively improve the fluidity of the heat exchange medium in the thermal management component 30 and the partition piece 40, thereby further improving the heat exchange efficiency of the thermal management component 30 and the partition piece 40. At the same time, unlike a structure in which the first heat exchange cavity and the second heat exchange cavity are isolated from each other, the first heat exchange cavity and the second heat exchange cavity are communicated with each other, so there is no need to dispose a separate liquid inlet and outlet structure on each of the thermal management components 30 and partition pieces 40. In this way, the number of liquid inlet and outlet structures of partition pieces 40 or thermal management components 30 can be reduced, thereby reducing the space occupation rate of such components inside the battery 100, which is conducive to further improving the energy density of the battery 100.

In some embodiments, still referring to FIG. 3, the partition piece 40 is provided with a third surface 41 facing towards the battery cells 20, and the third surface 41 is provided with a heat insulation layer.

The heat insulation layer can be made of a material with a low thermal conductivity. The heat insulation layer can be a coating layer coated on the surface of the partition piece 40. The heat insulation layer can also be disposed separately and connected with the partition piece 40 by bonding, screwing, or other manners to form an overall structure.

The material of the heat insulation layer can be silicone, foam plastic, mica, ceramics, etc.

The surface of the partition piece 40 facing towards the battery cells 20 is provided with the heat insulation layer, which can effectively improve the heat insulation effect of the partition piece 40. When thermal runaway occurs to an individual battery cell 20, the partition piece 40 can effectively reduce the risk that heat of the battery cell 20 under thermal runaway is transferred to adjacent battery cells 20, thereby effectively reducing the risk of thermal diffusion of the battery 100 and improving the reliability of the battery 100.

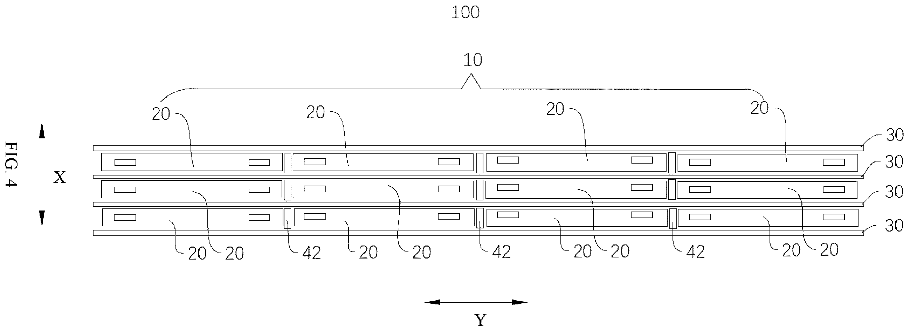

In some embodiments, referring to FIG. 4, FIG. 4 is a front view of a battery according to still other embodiments of the present application, where a partition piece of the battery is a heat insulation pad. The heat insulation pad 42 is adopted as the partition piece 40.

The heat insulation pad 42 refers to a component with a low thermal conductivity that can block heat transfer. The heat insulation pad 42 can adopt various implementation structures, such as a silicone pad or an aerosol pad with a good heat insulation effect.

The heat insulation pad 42 is disposed between two adjacent battery cells 20 in the same battery cell group 10 to block heat transfer between adjacent battery cells 20. The heat insulation pad is mature in structure, low in cost, and simple in assembly process and has high practicality.

In some embodiments, the partition piece 40 is in contact with the battery cell 20, which is conducive to giving full play to the limiting effect of the partition piece 40 on the battery cell 20 and improving the relative positional stability of the battery cell 20; at the same time, waste of the space between the partition piece 40 and the battery cell 20 can be reduced, which is conducive to further improving the internal space utilization of the battery 100, thereby improving the volumetric energy density of the battery 100.

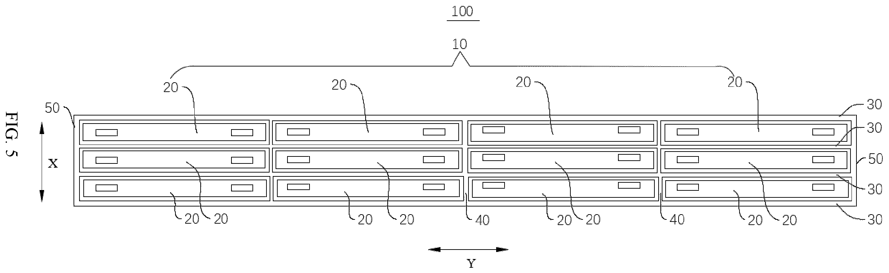

In yet some other embodiments, referring to FIG. 5, FIG. 5 is a front view of a battery according to yet some other embodiments of the present application. The battery 100 further includes two side plates 50 disposed at intervals along the second direction Y, where the thermal management component 30 is connected with the two side plates 50.

The two side plates 50 are located on two opposite sides of the battery cell group 10 along the second direction Y and are connected with the thermal management component 30. In some embodiments, the side plates 50 may be connected with the thermal management component 30 by screwing, welding, gluing or other manners.

In some other embodiments, the side plates 50 and the thermal management components 30 may be integrally formed to further improve the integration of the thermal management component 30 and the side plate 50, and improve the structural strength of the thermal management component 30 and the side plate 50, thereby giving full play to the anti-expansion effect of the thermal management component 30 and the side plate 50, and simplifying the assembly process of the entire battery 100.

In practical applications, the side plates 50 and the plurality of thermal management components 30 can be pre-formed or pre-assembled into a basic installation structure, so that an accommodation space 70 for accommodating battery cells 20 is formed between two adjacent thermal management components 30. Then the battery 100 can be assembled by inserting the battery cells 20 between adjacent thermal management components 30.

The two side plates 50 are disposed on two opposite sides of the thermal management component 30 along the second direction Y, and the side plates 50 can further improve the structural integration of the battery 100, and achieve a fixing and limiting effect on a plurality of thermal management components 30, which is conducive to improving the relative positional stability of the plurality of thermal management components 30; at the same time, the side plates achieve a protecting and limiting effect on the battery cell 20 of the battery cell group 10 located on the outermost side in the second direction Y.

In some embodiments, a third heat exchange cavity configured to accommodate a heat exchange medium is disposed in the side plate 50.

In other words, the side plate 50 can be made of a material with a good thermal conductivity to accommodate the heat exchange medium to regulate the temperature of the battery cell 20.

Similar to the structures of the thermal management component 30, there can be various embodiments for the third heat exchange cavity. For example, a cavity may be disposed inside the side plate 50, and the cavity is formed into the third heat exchange cavity; or a plurality of parallel or S-shaped circuitous channels may also be disposed inside the side plate 50, and the channels disposed inside the side plate 50 are formed into the third heat exchange cavity.

The heat exchange medium can be accommodated inside the side plate 50, that is, the side plate 50 itself is also formed into a thermal management component 30, which can exchange heat with the battery cells 20, thereby further improving the temperature regulation effect on the battery cells 20.

In some embodiments, the third heat exchange cavity is connected with the first heat exchange cavity of at least one thermal management component 30.

Specifically, a plurality of thermal management components 30 are disposed along the first direction X, and the plurality of thermal management components 30 all can be connected with the side plate 50. At the same time, the third heat exchange cavity of the side plate 50 may be communicated with the first heat exchange cavity of only one thermal management component 30, or may be communicated with the first heat exchange cavities of multiple or all thermal management components 30. As an example, the side plates 50 are integrally formed with the thermal management components 30, and the third heat exchange cavity of the side plate 50 is communicated with the first heat exchange cavities of all the thermal management components 30.

The third heat exchange cavity of the side plate 50 is communicated with the first heat exchange cavity of at least one thermal management component 30, which can effectively improve the fluidity of the heat exchange medium in the thermal management component 30 and the side plate 50, thereby further improving the heat exchange efficiency of the thermal management component 30 and the side plate 50. At the same time, unlike a structure in which the first heat exchange cavity and the third heat exchange cavity are isolated from each other, the first heat exchange cavity and the third heat exchange cavity are communicated with each other, so there is no need to dispose a separate liquid inlet and outlet structure on each of the thermal management components 30 and side plates 50. In this way, the number of liquid inlet and outlet structures of side plates 50 or thermal management components 30 can be reduced, thereby reducing the space occupation rate of such components inside the battery 100, which is conducive to further improving the energy density of the battery 100.

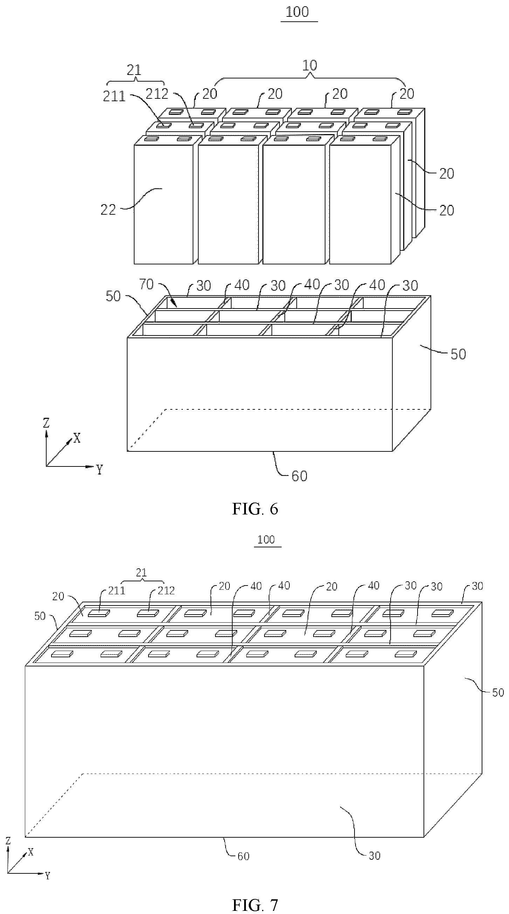

In some other embodiments, referring to FIG. 6 and FIG. 7: FIG. 6 is an exploded view of a battery according to some other embodiments of the present application, and FIG. 7 is a schematic diagram of an overall structure of the battery according to some other embodiments of the present application. The battery 100 further includes: a bottom plate 60 disposed on a side of the plurality of thermal management components 30 along the third direction Z and connected with at least one thermal management component 30, where the first direction X, the second direction Y, and the third direction Z are perpendicular to each other.

Specifically, a plurality of thermal management components 30 are disposed along the first direction X, the bottom plate 60 is disposed on a side of the plurality of thermal management components 30 along the third direction Z, and the third direction Z intersects the surface on which the bottom plate 60 is located. As an example, the third direction Z may be perpendicular to the bottom plate 60. The bottom plate 60 may be connected with only one thermal management component 30, or may be connected with multiple thermal management components 30 or all thermal management components 30. As an example, all thermal management components 30 are connected with the bottom plate 60.

In some embodiments, the bottom plate 60 may be connected with the thermal management component 30 by screwing, welding, gluing or other manners.

In some other embodiments, the bottom plate 60 and the thermal management components 30 may be integrally formed to further improve the integration of the thermal management component 30 and the bottom plate 60, and improve the structural strength of the thermal management component 30 and the bottom plate 60, thereby giving full play to the anti-expansion effect of the thermal management component 30 and the bottom plate 60, and simplifying the assembly process of the entire battery 100.

It can be understood that a certain gap may remain between the bottom plate 60 and the battery cell 20, or the two may be in contact with each other.

In some embodiments, the bottom plate 60 is in contact with the battery cell 20, which is conducive to giving full play to the limiting effect of the bottom plate 60 on the battery cell 20 and improving the relative positional stability of the battery cell 20; at the same time, waste of the space between the bottom plate 60 and the battery cell 20 can be reduced, which is conducive to further improving the internal space utilization of the battery 100, thereby improving the volumetric energy density of the battery 100.

It can be understood that the battery cell 20 and the bottom plate 60 may be in line or surface contact with each other. As an example, the battery cell 20 is in surface contact with the bottom plate 60.

The bottom plate 60 can be configured to support the battery cell group 10, and plays a limiting effect on the battery cells 20 in the third direction Z, which is conducive to further improving the positional stability of each battery cell 20; and the bottom plate 60 can achieve an isolating and protecting effect on the battery cells 20, which is conducive to improving the performance stability and use safety and reliability of the battery 100.

In some embodiments, a fourth heat exchange cavity configured to accommodate a heat exchange medium is disposed in the bottom plate 60.

In other words, the bottom plate 60 can be made of a material with a good thermal conductivity to accommodate the heat exchange medium to regulate the temperature of the battery cell 20.

Similar to the structures of the thermal management component 30, there can be various embodiments for the fourth heat exchange cavity. For example, a cavity may be disposed inside the bottom plate 60, and the cavity is formed into the fourth heat exchange cavity; or a plurality of parallel or S-shaped circuitous channels may also be disposed inside the bottom plate 60, and the channels disposed inside the bottom plate 60 are formed into the fourth heat exchange cavity.

The heat exchange medium can be accommodated inside the bottom plate 60, that is, the bottom plate 60 itself is also formed into a thermal management component 30, which can exchange heat with the battery cells 20, thereby further improving the temperature regulation effect on the battery cells 20.

In some embodiments, the fourth heat exchange cavity is communicated with the first heat exchange cavity of at least one thermal management component 30.

Specifically, a plurality of thermal management components 30 are disposed along the first direction X, the bottom plate 60 may be connected with one of the thermal management components 30, and the third heat exchange cavity of the bottom plate 60 is communicated with the first heat exchange cavity of the thermal management component 30. The bottom plate 60 may also be connected with multiple or all of the thermal management components 30, and the fourth heat exchange cavity of the bottom plate 60 is communicated with the first heat exchange cavities of multiple thermal management components 30 connected with the bottom plate 60.

As an example, the bottom plate is integrally formed with all of the thermal management components 30, and the fourth heat exchange cavity of the bottom plate 60 is communicated with the first heat exchange cavities of all the thermal management components 30.

The fourth heat exchange cavity of the bottom plate 60 is communicated with the first heat exchange cavity of at least one thermal management component 30, which can effectively improve the fluidity of a heat exchange medium in the thermal management component 30 and the bottom plate 60, thereby further improving the heat exchange efficiency of the thermal management component 30 and the side plate 50. At the same time, the number of liquid inlet and outlet structures of bottom plates 60 or thermal management components 30 can be reduced, thereby reducing the space occupation rate of such components inside the battery 100, which is conducive to further improving the energy density of the battery 100.

In some other embodiments, still referring to FIG. 6 and FIG. 7, a side that is of the battery cell 20 and that is facing away from the bottom plate 60 is provided with an electrode terminal 21.

The electrode terminal 21 is configured to output or input power of a battery cell 20. In some embodiments, each battery cell 20 may be provided with two electrode terminals 21 including a positive terminal 211 and a negative terminal 212. The positive terminal 211 and the negative terminal 212 may be provided at intervals on the side that is of the battery cell 20 and that is facing away from the bottom plate 60.

The electrode terminals 21 of each battery cell 20 are located on the side that is of the battery cell 20 and that is facing away from the bottom plate 60 so as to facilitate the interconnection of the electrode terminals 21 of a plurality of battery cells 20, which is conducive to simplifying the assembly process of the battery 100 and reducing the assembly difficulty of the battery 100. In addition, the disposal of the electrode terminals 21 on the side that is of the battery cell 20 and that is facing away from the bottom plate 60 can effectively reduce the occupation rate of the electrode terminals 21 in an accommodation space 70 enclosed by the thermal management component 30 and the bottom plate 60, and allow the accommodation space 70 to accommodate as many main body structures of the battery cells 20 as possible, thereby further improving the energy density of the battery 100.

In some embodiments, the battery cell 20 is a pouch-type battery cell.

The pouch-type battery cell 20 is prone to deformation. By sandwiching the pouch-type battery cell 20 between two adjacent thermal management components 30, the structural strength of the pouch-type battery cell 20 can be effectively improved. In the meanwhile, the thermal management components 30 can achieve a supporting effect on the battery cell groups 10, and isolate the two adjacent battery cell groups 10, so as to reduce the possibility that a large number of pouch-type battery cells 20 are deformed after being stacked together and squeezed with each other, and reduce the risk of large-scale thermal diffusion when thermal runaway occurs to the battery cells 20, thereby improving the structural stability and performance reliability of the pouch-type battery 100.

According to a second aspect, the present application provides an electrical device. The electrical device includes a battery 100 according to any one of the above solutions. The battery 100 is configured to provide electrical energy.

The electrical device may be any one of the aforementioned systems or devices that applies the battery 100.

Referring to FIG. 1 to FIG. 7, some embodiments of the present application provide a battery 100. The battery 100 includes: four thermal management components 30, three battery cell groups 10, a plurality of partition pieces 40, two side plates 50 and a bottom plate 60. The four thermal management components 30 are disposed at intervals along a first direction X; the thermal management components 30 are of a plate-like structure, and a thickness direction of the thermal management components is parallel to the first direction X; and the side plates 50 are disposed on two opposite sides of each of the thermal management component 30 along a second direction Y, and are connected with two opposite ends of each of the thermal management components 30 in the second direction Y. The first direction X, the second direction Y, and the third direction Z are perpendicular to each other.

The two side plates 50, the bottom plate 60, and the two thermal management components 30 located on the outermost side in the first direction X enclose a frame-type structure with an open end, and the two thermal management components 30 located at the middle in the first direction X form two lateral partitions disposed at intervals.

A plurality of partition pieces 40 are disposed at intervals along the second direction Y between two adjacent thermal management components 30, the partition pieces 40 are formed into a vertical partition of the above-mentioned frame-type structure, and the partition pieces 40 partition the space between two adjacent thermal management components 30 into a plurality of accommodation spaces 70 parallel along the second direction Y.

Each battery cell group 10 includes a plurality of pouch-type battery cells 20, one battery cell 20 is inserted into each accommodation space 70, so that a plurality of pouch-type battery cells 20 of each battery cell group 10 are disposed between two adjacent thermal management components 30 and arranged along the second direction Y.

The thermal management components 30, the side plates 50, the bottom plate 60 and partition pieces 40 are all integrally formed, and a first heat exchange cavity is disposed inside each thermal management component 30, a second heat exchange cavity is disposed inside each partition piece 40, a third heat exchange cavity is disposed inside each side plate 50, a fourth heat exchange cavity is disposed inside the bottom plate 60, and the first heat exchange cavity, the second heat exchange cavity, the third heat exchange cavity and the fourth heat exchange cavity all accommodate the heat exchange media and are communicated with each other.

In actual production and assembly, the bottom plate 60, the thermal management component 30, the side plate 50 and the partition piece 40 can be pre-formed into an overall frame structure. During assembly of the battery 100, the frame structure can be placed in such a way that the bottom plate 60 faces towards the ground or other directions that facilitate the assembly of battery cells 20, and then a plurality of pouch-type battery cells 20 are inserted into the accommodation spaces 70 one by one from the open end that is of the side of the overall frame and that is facing away from the bottom plate 60. The pouch-type battery cells allow the initial assembly deformation margin to be much larger than that of the hard-shell battery cells, which makes it possible that the above-mentioned overall frame structure can be formed first, and then the pouch-type battery cells can be inserted into the accommodation spaces 70 of the frame structure.

It can be understood that like the thermal management component 30, the bottom plate 60, the side plate 50, and the partition piece 40 can all be made of metal materials with a good thermal conductivity. In order to facilitate the flow of the heat exchange medium, an inlet for the heat exchange medium to enter the frame structure and an outlet for the heat exchange medium to exit the frame structure may also be disposed. The inlet and the outlet may be disposed on the thermal management component 30 or the side plate 50 or the bottom plate 60 to facilitate assembly of the entire battery 100. Certainly, in some other embodiments, the inlet and the outlet may also be disposed on the partition piece 40. The inlet and the outlet can be disposed on the same component or on different components.

It is hereby noted that to the extent that no conflict occurs, the embodiments of the present application and the features in the embodiments may be combined with each other.

Although the present application has been described with reference to preferred embodiments, various improvements may be made thereto and components thereof may be replaced with equivalents without departing from the scope of the present application. Particularly, technical features mentioned in the embodiments may be combined in any manner as long as there is no structural conflict. The present application is not limited to the specific embodiments disclosed in this specification, but includes all technical solutions falling within the scope of the claims.

## Claims

1. A battery, **characterized in that** the battery comprises:
a plurality of thermal management components disposed at intervals along a first direction;
at least one battery cell group, each battery cell group being disposed between two adjacent thermal management components;
wherein each battery cell group comprises a plurality of battery cells arranged along a second direction perpendicular to the first direction, and a first heat exchange cavity configured to accommodate a heat exchange medium is disposed inside each of the thermal management components so that temperatures of the battery cells are adjusted by using the thermal management component; and
a bottom plate disposed on a side of the plurality of thermal management components along a third direction and connected with at least one thermal management component, wherein the first direction, the second direction, and the third direction are perpendicular to each other.

2. The battery according to claim 1, **characterized in that** each battery cell comprises a first surface and a second surface disposed opposite to each other along the first direction, wherein the first surface and/or the second surface are/is a surface with a largest area among all external surfaces of the battery cell.

3. The battery according to claim 1 or 2, **characterized in that** the battery cell comprises a first surface and a second surface disposed opposite to each other along the first direction, wherein the first surface is opposite to one of two adjacent thermal management components, and the second surface is opposite to the other of the two adjacent thermal management components;
wherein the first surface and/or the second surface are/is in contact with the thermal management components.

4. The battery according to any one of claims 1-3, **characterized in that** the thermal management component is of a plate-like structure, and a thickness direction of the thermal management component is parallel to the first direction.

5. The battery according to any one of claims 1-4, **characterized in that** the battery further comprises:
a plurality of partition pieces disposed between two adjacent battery cells of each battery cell group.

6. The battery according to claim 5, **characterized in that** each partition piece is connected with two adjacent thermal management components.

7. The battery according to claim 6, **characterized in that** the thermal management components and the partition pieces are integrally formed.

8. The battery according to any one of claims 5-7, **characterized in that** a second heat exchange cavity configured to accommodate the heat exchange medium is disposed in the partition piece.

9. The battery according to claim 8, **characterized in that** the second heat exchange cavity is connected with the first heat exchange cavity of at least one thermal management component.

10. The battery according to any one of claims 5-7, **characterized in that** the partition piece is provided with a third surface facing towards the battery cells, and the third surface is provided with a heat insulation layer.

11. The battery according to any one of claims 5-7, **characterized in that** the partition piece is a heat insulation pad.

12. The battery according to any one of claims 5-11, **characterized in that** the partition piece is in contact with the battery cell.

13. The battery according to any one of claims 1-12, **characterized in that** the battery further comprises:
two side plates disposed at intervals along the second direction, wherein the thermal management component is connected with the two side plates.

14. The battery according to claim 13, **characterized in that** a third heat exchange cavity configured to accommodate the heat exchange medium is disposed in each of the side plates.

15. The battery according to claim 14, **characterized in that** the third heat exchange cavity is communicated with the first heat exchange cavity of at least one thermal management component.

16. The battery according to any one of claims 13-15, **characterized in that** the thermal management components and the side plates are integrally formed.

17. The battery according to any one of claims 1-16, **characterized in that** the bottom plate is in contact with the battery cell.

18. The battery according to any one of claims 1-17, **characterized in that** the bottom plate and the thermal management components are integrally formed.

19. The battery according to any one of claims 1-18, **characterized in that** a fourth heat exchange cavity configured to accommodate the heat exchange medium is disposed in the bottom plate.

20. The battery according to claim 19, **characterized in that** the fourth heat exchange cavity is communicated with the first heat exchange cavity of at least one thermal management component.

21. The battery according to any one of claims 1-20, **characterized in that** a side that is of the battery cell and that is facing away from the bottom plate is provided with an electrode terminal.

22. The battery according to any one of claims 1-21, **characterized in that** the battery cell is a pouch-type battery cell.

23. An electrical device, **characterized in that** the electrical device comprises the battery according to any one of claims 1-22, wherein the battery is configured to provide electrical energy.
